(19) Europäisches Patentamt
European Patent Office
Office européen des brevets

(11) EP 1 690 829 A1

(12) EUROPEAN PATENT APPLICATION
published in accordance with Art. 158(3) EPC

(43) Date of publication:
**16.08.2006 Bulletin 2006/33**

(21) Application number: **04799818.2**

(22) Date of filing: **18.11.2004**

(51) Int Cl.:
***C01B 33/18*** *(2006.01)* ***C08L 9/00*** *(2006.01)*
***C08K 9/06*** *(2006.01)* ***C09C 1/30*** *(2006.01)*
***C09C 3/12*** *(2006.01)*

(86) International application number:
**PCT/JP2004/017530**

(87) International publication number:
**WO 2005/049493 (02.06.2005 Gazette 2005/22)**

(84) Designated Contracting States:
**BE DE FR IT**

(30) Priority: **18.11.2003 JP 2003388097**
**06.05.2004 JP 2004137322**
**30.06.2004 JP 2004194326**

(71) Applicants:
- **THE YOKOHAMA RUBBER CO., LTD.**
  **Tokyo 105-8685 (JP)**
- **Dow Corning Toray Co., Ltd.**
  **Tokyo 100-0005 (JP)**

(72) Inventors:
- **Mihara, Satoshi,**
  **c/o The Yokohama Rubber Co., Ltd.**
  **Hiratsuka-shi,**
  **Kanagawa 2548601 (JP)**
- **Kameda, Yoshihiro,**
  **c/o The Yokohama Rubber Co. Ltd**
  **Hiratsuka-shi,**
  **Kanagawa 2548601 (JP)**
- **Nomura, Yasuo**
  **Yokohama-shi,**
  **Kanagawa 2230064 (JP)**
- **Takahashi, Susumu**
  **Yokohama-shi,**
  **Kanagawa 2330001 (JP)**

(74) Representative: **HOFFMANN EITLE**
**Patent- und Rechtsanwälte**
**Arabellastrasse 4**
**81925 München (DE)**

# (54) SILICA TREATED WITH SILANE COUPLING AGENT AND RUBBER COMPOSITION CONTAINING SAME

(57) A rubber component containing at least one a diene-based rubber in an amount of 100 parts by weight and a surface-treated silica treated, on the surface thereof, with at least one silane coupling agent X represented by formula (I):

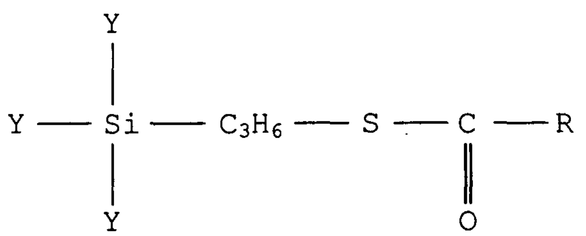

(I)

wherein Y independently indicate a methoxy, ethoxy, propoxy, isopropoxy, butoxy, isobutoxy or acetoxy group, R indicates a $C_1$ to $C_{18}$ hydrocarbon group selected from a linear, cyclic or branched alkyl group, alkenyl group, aryl group, and aralkyl group and a rubber composition containing the same.

EP 1 690 829 A1

## Description

### TECHNICAL FIELD

The present invention relates to a silane coupling agent-treated silica and a rubber composition containing the same, more specifically relates to a silane coupling agent- (or an organic silane compound-) surface-treated silica capable of suppressing reactions involving the silane coupling agent at the time of compounding, without detracting from the reinforcing capability, improving the dispersibility of the silica, and improving the abrasion resistance, wet skid performance, etc. in a rubber composition containing silica and a rubber composition containing the same.

### BACKGROUND ART

In recent years, in tread compounds for passenger car tires, it becomes the practice to compound silica in the compounds in order to reduce the fuel consumption due to the tires and improve the wet skid performance. For improving the reinforcing capability or processability of the silica-containing rubber composition, a silane coupling agent having, in the molecule thereof, an alkoxysilyl group capable of chemically reacting with silica, typically Si69 commercially available from Degussa is used. However, this silica-containing rubber composition is accompanied with a reaction between the silane coupling agent and silica or a reaction between silica and the polymer through the silane coupling agent at the time of mixing etc. These reactions form alcohol, whereby the generation of porosity is caused or the control of the mixing temperature (for example, 140 to 165°C) is required, and therefore there was the problem that they unpreferably decrease the productivity. For this reason, it has been proposed not to add a silane coupling agent to the rubber composition, but to pretreat the silica with a silane coupling agent (see, for example, U.S. Patent No. 4141751, EP-A-177674, JP-A-59-206469, JP-A-5-17705, JP-A-9-328631 and JP-A-2002-3652). However, for this sort of pre-treated silica, if the amount of the silane coupling agent used for the pre-treatment is increased, the problem remains that the reaction between the silane coupling agents causes the silica to aggregate and the viscosity of the rubber composition to increase.

However, to secure drivability, braking capability, driving stability and other ice performance of studless tires on ice or snow covered roads, in the past, from the viewpoint of improvement of the rubber quality, the practice has been to compound a rubber having a low glass transition temperature such as butadiene rubber into a rubber composition containing natural rubber, to increase the amount of softener to be compounded, or to compound a silica-based filler, short fiber, porous substance, etc. so as to improve the quality of hard-to-cure rubber even at low temperatures, but the abrasion resistance, driving stability, etc. are decreased and, therefore, a satisfactory result cannot be obtained just by the improvement in the low temperature characteristics of the rubber.

### SUMMARY OF THE INVENTION

Accordingly, an object of the present invention is to provide a surface-treated silica for a rubber composition capable of avoiding the problems of a silica-containing rubber composition due to the silane coupling agent and capable of improving the processability, silica dispersibility, abrasion resistance, wet braking performance, etc. and a rubber composition containing the same.

Another object of the present invention is to provide a rubber composition capable of avoiding the problems due to silica and a silane coupling agent in a natural rubber (NR)/polybutadiene rubber (BR) and capable of improving the low temperature characteristics such as frictional force on ice, without detracting from the processability, abrasion resistance, aging resistance and driving stability.

In accordance with the present invention, there is provided a surface-treated silica treated, on the surface thereof, with at least silane coupling agent X represented by the formula (I):

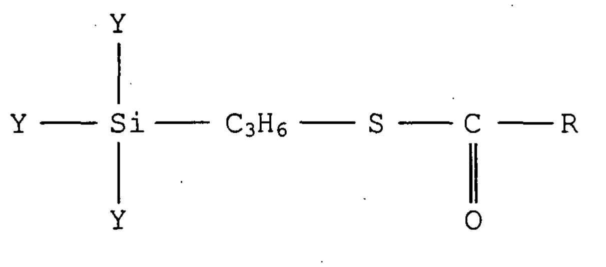

(I)

wherein Y independently indicates a methoxy, ethoxy; propoxy, isopropoxy, butoxy, isobutoxy or acetoxy group, R indicates a $C_1$ to $C_{18}$ hydrocarbon group selected from a linear, cyclic, or branched alkyl group, alkenyl group, aryl group, and aralkyl group.

In accordance with the present invention, there is also provided the silica treated, on the surface thereof, with a silane coupling agent, where the surface-treated silica treated on the surface thereof, with the silane coupling agent X has a bulk density retention rate of 50 to 150%.

In accordance with the present invention, there is further provided a rubber composition comprising a rubber component containing 100 parts by weight of at least one a diene-based rubber and silica treated, on the surface thereof in advance, with 2 to 100 parts by weight particularly 20 to 100 parts by weight of the silane coupling agent X.

In accordance with the present invention, there is still further provided a rubber composition for a studless tire comprising 30 to 80 parts by weight of natural rubber, 70 to 20 parts by weight of polybutadiene rubber and 2 to 30 parts by weight of silica treated, on the surface thereof, with at least one silane coupling agent X having the above formula (I).

BEST MODE FOR CARRYING OUT THE INVENTION

The present inventors found that, for example, by compounding silica treated, on the surface thereof, with 3-octanoylthio-propyltrialkoxysilane having, at one end thereof, a trialkoxysilyl group reactive with silica, it is possible to suppress the reaction between silane coupling agents with each other, without impairing the reinforcing capability, so as to improve the dispersibility of silica and to thereby keep the Mooney viscosity of the rubber composition low and to obtain a rubber composition having a small dependency of the Mooney viscosity on the mixing temperature and that further by using this rubber composition, a pneumatic tire having superior abrasion resistance, wet skid performance, etc. can be obtained.

The singular forms ("a", "an", and "the") used in the present description and the attached claims should be understood as including the plural form except when otherwise clear from the context.

As the rubber composition compounded into the rubber composition according to the first aspect of the present invention, any diene-based rubber generally used in the past for tires or other applications, for example, various types of natural rubber (NR), various types of polyisoprene rubber (IR), various types of styrene-butadiene copolymer rubber (SBR), various types of polybutadiene rubber (BR), various types of acrylonitrile-butadiene copolymer rubber (NBR), etc. may be mentioned. These may be used alone or in any blends thereof. In the rubber composition according to the present invention, the rubber component contains natural rubber (NR) in an amount of preferably 10% by weight or more, more preferably 15 to 80% by weight, and styrene-butadiene copolymer rubber (SBR) in an amount of preferably 20% by weight or more, more preferably 20 to 85% by weight, and further, optionally, any other diene-based rubber, where the temperature dependency of the rubber physical properties such as dynamic elasticity E' becomes smaller and the wet skid performance in a broad temperature range, in particular the low temperature range, is further improved.

In the second aspect of the present invention, by compounding silica treated, on the surface thereof, with silane coupling agent X such as 3-octanoylthiopropyltriethoxysilane or into an NR/BR system, the inventors succeeded in realizing both abrasion resistance and performance on ice. In particular, the abrasion resistance and temperature dependency of the hardness are small, the performance on ice is superior in all temperature regions, the molecular chain cleavage of the polymer at the time of mixture is small, the change in hardness due to aging is small, and the Mooney viscosity is reduced.

As the rubber component compounded into the rubber composition according to the second aspect of the present invention, natural rubber (NR) and polybutadiene rubber (BR) are used in a ratio NR/BR of 30 to 80/70 to 20 (parts by weight), preferably 40 to 70/60 to 30 (parts by weight). If the ratio of NR in this formulation is too large, the abrasion resistance and the frictional force on ice at the time of a low temperature are decreased, and therefore this is not preferable. Conversely, if too small, the strength of the rubber is decreased, and therefore this is not preferable. Note that, as the natural rubber, any natural rubber usable in the rubber industry in the past can be used. The same is true for polybutadiene rubber. Note that, as the natural rubber or polybutadiene rubber, a polybutadiene rubber having a glass transition temperature of -55°C or less is preferable.

As the silica usable in the present invention, any silica usable for a tire in the past, for example, natural silica, synthetic silica, more specifically precipitated silica, dry silica or wet silica may be used. According to the present invention, the silica is used uniformly mixed with and treated, on the surface thereof, with the silane coupling agent X having the formula (I). This surface treatment is based on the chemical or physical bonding such as the reaction of the silica and the trialkoxysilyl group ($-SiY_3$) of the silane coupling agent X having the formula (I). Note that the silane coupling agent may be used for treatment of the surface of the silica after the pre-treatment such as hydrolysis, condensation. Further, to complete the reaction between the silica and silane coupling agent, it is also possible to use the method of hydrolyzing and condensing the silane coupling agent in advance before reaction with the silica, the method for aging by heating, the method for adding a reaction accelerator such as a catalyst (for example, acid·alkali·tin/aluminum or other organometallic catalyst).

As the silane coupling agent X usable in the present invention, for example, 3-octanoylthiopropyltriethoxysilane, 3-propionitrylthiopropyltrimethoxysilane, etc. may be mentioned. These may be synthesized by a known method. Specifically, the method disclosed in JP-A-2001-505225 (rubber containing filler) enables them to be obtained by a reaction between the corresponding mercaptosilane and acid anhydride or acid chloride or ester exchange reaction between the corresponding mercaptosilane and thioester. Note that 3-octanoylthiopropyltriethoxysilane is commercially available from Nippon Unicar K.K. as NXT Silane.

Silica particles may be treated on their surface by a known method, for example, the dry reaction method, wet reaction method, etc. The dry reaction method is a method for charging silica particles into a Henschel mixer or other high speed agitation apparatus and agitating them, while adding the silane coupling agent X or a hydrolyzed solution of the silane coupling agent X. As the method for addition, the method of uniform reaction of the silane coupling agent X is preferable. A known method, for example, the method of gradual dropping, the method of spraying in a mist, the method of introducing a gaseous silane, etc. may be used. The wet reaction method is the method for dispersing silica particles in a solution of silane coupling agent, causing a reaction in that state, and then optionally drying. As the solvent used, water, alcohol, or a mixture of the same are preferable. In either of the dry reaction method and wet reaction method, a known method for increasing the reactivity of the silane coupling agent and the hydroxy groups on the surface of the silica particles, for example, the method of post heat treatment or the method of using a condensation catalyst such as an acid, alkali, organometal (for example, a tin- or aluminum-based organometal) may be used.

In the present invention, the bulk density retention rate of the silica treated on the surface thereof with the silane coupling agent X is preferably 50 to 150%, more preferably 60 to 140%. Here, the "bulk density retention rate (%)" means the value derived from the following equation (II).

[(Bulk density of silica after surface treatment - bulk density of silica after surface treatment)/(Bulk density of silica before surface treatment x silane coupling agent treatment rate/100)] x 100 (II)

Here, the "silane coupling agent treatment rate (%)" means the ratio of the silane coupling agent used for treatment of the surface of the silica and is the value derived from the following formula:

[(Weight of silane coupling agent/Weight of silica before treatment)] x 100

If the bulk density retention rate is too small, a sufficient amount of surface treatment cannot be obtained, and, therefore, the desired effect is liable to be hard to obtain. Conversely, if too large, the surface treatment cannot be performed uniformly and the dispersibility in the rubber or processability are liable to become insufficient, and, therefore, this is not preferable. Note that the bulk density was measured, based on the method of JIS K 5101, and evaluated by three test samples randomly sampled from the surface-treated silica.

The silica treated on the surface thereof with the silane coupling agent X used in the present invention is compounded into 100 parts by weight of a rubber component in an amount of 2 to 100 parts by weight, preferably 5 to 100 parts by weight. If the amount is too small, the wet skid performance is decreased, and, therefore, this is not preferable, while conversely if too large, the dispersibility of silica deteriorates and the abrasion resistance is decreased, and, therefore, this is not preferable. The silane coupling agent treatment rate of the silica and silane coupling agent X according to the present invention is not particularly limited, but 1 to 25% is preferable, and 4 to 25% is more preferable.

In the rubber composition according to the first aspect of the present invention, the silica treated with the silane coupling agent is preferably included in 100 parts by weight of the rubber component in an amount of 20 to 100 parts by weight, more preferably 30 to 100 parts by weight.

In the rubber composition according to the second aspect of the present invention, from the viewpoint of the frictional force on ice or abrasion resistance, the silica treated with the silane coupling agent is preferably included in 100 parts by weight of the rubber component in an amount of 2 to 30 parts by weight, more preferably 5 to 25 parts by weight.

The rubber composition according to the present invention may further contain, in addition to the above essential ingredients, carbon black or another filler, vulcanization or cross-linking agent, vulcanization or cross-linking accelerator,

various types of oil, antioxidant, plasticizer, or other various types of additives generally compounded for tire use or other general rubber uses. The additives may be mixed and vulcanized to obtain a composition by a general method and used for vulcanization or cross-linking. The amounts of these additives may be made the conventional general amounts so long as not running counter to the present invention.

## EXAMPLES

Examples will now be used to explain the present invention further, but the present invention is not limited to these Examples.

### Standard Example 1, Examples 1 to 5 and Comparative Examples 1 to 4

### Preparation of Samples

In each of the formulations shown in Table I, the ingredients other than the vulcanization accelerator and sulfur were mixed in a 3 liter internal mixer for 5 minutes and discharged, when reaching 165±5°C, to obtain a master batch. This master batch was mixed with the vulcanization accelerator and sulfur by an open roll to obtain a rubber composition. This rubber composition was used to evaluate the unvulcanized physical properties by the following test methods. The results are shown in Table I.

Next, the rubber composition thus obtained was vulcanized in a 15 x 15 x 0.2 cm mold at 160°C for 30 minutes to prepare a vulcanized rubber sheet which was then measured for the physical properties of the vulcanized rubber by the following test methods. The results are shown in Table I.

### Test Methods for Evaluation of Rubber Physical Properties

Mooney viscosity ($ML_{1+4}$): Measured based on JIS K-6300 mixed at 130°C, 160°C, and 180°C.

Payne effect: E' and E" were measured under conditions of a frequency of 20 Hz, an initial strain of 10% and an amplitude of 0.08 to 10%, E'(O) and E'(∞) found from a cole-cole plot, and E' (O) - E'(∞) calculated. The smaller the value of E'(O) - E'(∞) the better the dispersibility of the filler shown.

Abrasion resistance: A Lambourn abrasion tester was used to measure the volume of abrasion loss under conditions of a temperature of 23°C/slip rate 50%. In Table I, the value is shown indexed to Standard Example 1 and in the later Table II, the value is shown indexed to Standard Example 2. The larger this value, the better the abrasion resistance shown.

M300/M100: The 300% modulus (M300) and 100% modulus (M100) were measured according to JIS K-6251. Note that the larger the value of M300/M100, the better the reinforcing action shown.

Wet skid performance: The tanδ at 0°C was measured under conditions of a frequency of 20 Hz, an initial strain of 10% and an amplitude of ±2%. The value of tanδ (0°C) at this time is correlated with the wet skid resistance. The larger the value, the better the wet skid resistance shown.

Table I

| | Stand. Ex. 1 | Comp. Ex. 1 | Comp. Ex. 2 | Comp. Ex. 3 | Comp. Ex. 4 | Ex. 1 | Ex. 2 | Ex. 3 | Ex. 4 | Ex. 5 |
|---|---|---|---|---|---|---|---|---|---|---|
| Formulation (parts by weight) | | | | | | | | | | |
| SBR | 80 | 80 | 80 | 80 | 80 | 80 | 80 | 80 | 80 | 80 |
| BR | 20 | 20 | 20 | 20 | 20 | 20 | 20 | 20 | 20 | 20 |
| Silica | 70 | 70 | 70 | - | - | - | - | - | - | - |
| A-1289 | 5.6 | - | - | - | - | - | - | - | - | - |
| A-1589 | - | 5.6 | - | - | - | - | - | - | - | - |
| NXT | - | - | 7.7 | - | - | - | - | - | - | - |
| A-1289 treated silica (8%*1)(75 to 82%*4) | - | - | - | 75.6 | - | - | - | - | - | - |
| A-1589 treated silica (8%*1)(85 to 90%*4) | - | - | - | - | 75.6 | - | - | - | - | - |
| NXT treated silica (5%*2)(95 to 99%*4) | - | - | - | - | - | - | 73.5 | - | - | - |
| NXT treated silica (11%*2)(96 to 98%*4) | - | - | - | - | - | - | - | 77.7 | - | - |
| NXT treated silica (20%*2)(75 to 82%*4) | - | - | - | - | - | - | - | - | 84 | - |
| NXT treated silica (2%*2)(95 to 98%*4) | - | - | - | - | - | 71.4 | - | - | - | - |
| NXT treated silica (30%*2)(90 to 105%*4) | - | - | - | - | - | - | - | - | - | 91 |
| CB | 10 | 10 | 10 | 10 | 10 | 10 | 10 | 10 | 10 | 10 |
| 6C | 2 | 2 | 2 | 2 | 2 | 2 | 2 | 2 | 2 | 2 |
| RD | 2 | 2 | 2 | 2 | 2 | 2 | 2 | 2 | 2 | 2 |
| Zinc White | 2 | 2 | 2 | 2 | 2 | 2 | 2 | 2 | 2 | 2 |
| Stearic acid | 1 | 1 | 1 | 1 | 1 | 1 | 1 | 1 | 1 | 1 |
| Oil | 10 | 10 | 10 | 10 | 10 | 10 | 10 | 10 | 10 | 10 |
| CZ | 2.2 | 2.2 | 2.2 | 2.2 | 2.2 | 2.2 | 2.2 | 2.2 | 2.2 | 2.2 |
| DPG | 0.2 | 0.2 | 0.2 | 0.2 | 0.2 | 0.2 | 0.2 | 0.2 | 0.2 | 0.2 |
| Sulfur | 1.6 | 1.6 | 1.6 | 1.6 | 1.6 | 1.6 | 1.6 | 1.6 | 1.6 | 1.6 |
| Evaluation of physical properties | | | | | | | | | | |
| Mooney viscosity (130°C*3) | 100 | 103 | 110 | 90 | 91 | 80 | 75 | 65 | 60 | 85 |
| Mooney viscosity (160°C*3) | 100 | 105 | 105 | 87 | 85 | 85 | 80 | 74 | 70 | 86 |
| Mooney viscosity (180°C*3) | 100 | 92 | 90 | 98 | 94 | 88 | 83 | 75 | 73 | 89 |
| Payne effect (160°C*3) | 100 | 84 | 81 | 106 | 84 | 75 | 60 | 51 | 65 | 83 |
| Abrasion resistance (160°C*3) | 100 | 90 | 100 | 101 | 94 | 110 | 120 | 140 | 130 | 115 |
| M300/M100 (160°C*3) | 100 | 95 | 94 | 100 | 90 | 100 | 100 | 103 | 101 | 101 |
| Wet skid performance (160°C*3) | 100 | 95 | 98 | 105 | 97 | 105 | 110 | 115 | 112 | 107 |

*1: Silane coupling agent treatment rate by A-1289 or A-1589

*2: Silane coupling agent treatment rate by NXT silane

*3: Mixture temperature of silica before silane coupling agent or silane coupling agent treatment

*4: Bulk density retention rate

As is clear from the results shown in Table I, in Examples 1 to 5, compared with the Standard Example 1, the decrease in the Mooney viscosity was large, the dependency on the mixing temperature was small, and further the abrasion resistance, M300/M100 (reinforcing action), and wet braking performance were good and the Payne effect was decreased. As opposed to this, in Comparative Examples 1 to 2, the A-1589 and 3-octanoylthiopropyl-triethoxysilane

were charged into solutions, so the viscosity was higher than the A-1289 formulation. However, with mixing at 180°C, the viscosity was decreased. This is believed because the amount of sulfur contained in the coupling agent is small, so no rubber scorching occurs. Further, in Comparative Examples 3 and 4, silica treated in advance by A-1289 and A-1589 were contained, and therefore the decrease in the viscosity was larger than with charging in a solution. Compared with Comparative Examples 1 and 2, the abrasion resistance, M300/M100 (reinforcing action) and wet skid performance were also improved.

Standard Example 2, Examples 6 to 7, and Comparative Example 5

Preparation of Samples

In each of the formulations shown in Table II, the ingredients other than the vulcanization accelerator and sulfur were mixed in a 3 liter internal mixer for 5 minutes and discharged when reaching 165±5°C to obtain a master batch. This master batch was mixed with the vulcanization accelerator and sulfur by an open roll to obtain a rubber composition. This rubber composition was used to evaluate the unvulcanized physical properties by the above test methods. The results are shown in Table II.

Next, the rubber composition thus obtained was vulcanized in a 15 x 15 x 0.2 cm mold at 160°C for 30 minutes to prepare a vulcanized rubber sheet which was then measured for the physical properties of the vulcanized rubber by the above test methods. The results are shown in Table II.

Table II

| | Stand. Ex. 2 | Comp. Ex. 5 | Ex. 6 | Ex. 7 |
|---|---|---|---|---|
| Formulation (parts by weight) | | | | |
| SBR*1 | 80 | 80 | 80 | 80 |
| BR*1 | 20 | 20 | 20 | 20 |
| silica *1 | 70 | 70 | 70 | 70 |
| CB*1 | 10 | 10 | 10 | 10 |
| 6C*1 | 2 | 2 | 2 | 2 |
| RD*1 | 2 | 2 | 2 | 2 |
| Zinc White*1 | 2 | 2 | 2 | 2 |
| Stearic acid*1 | 1 | 1 | 1 | 1 |
| Oil*1 | 10 | 10 | 10 | 10 |
| CZ*1 | 2.2 | 2.2 | 2.2 | 2.2 |
| DPG*1 | 0.2 | 0.2 | 0.2 | 0.2 |
| Sulfur*1 | 1.6 | 1.6 | 1.6 | 1.6 |
| A-1289*1 | - | Treatment method 2 | - | - |
| NXT*1 | Treatment method 1 | - | Treatment method 2 | Treatment method 3 |
| Bulk density retention rate (%) | 23.5 to 170 | 75 to 82 | 95 to 98 | 96 to 99 |
| Evaluation of physical properties | | | | |
| Mooney viscosity (130°C)*1 | 100 | 95 | 68 | 66 |
| Mooney viscosity (160°C)*1 | 100 | 85 | 73 | 71 |
| Mooney viscosity (180°C)*1 | 100 | 103 | 79 | 75 |
| Payne effect*1 | 100 | 106 | 51 | 48 |
| Abrasion resistance*1 | 100 | 103 | 143 | 144 |
| M300/M100*1 | 100 | 100 | 103 | 104 |

(continued)

| | Stand. Ex. 2 | Comp. Ex. 5 | Ex. 6 | Ex. 7 |
|---|---|---|---|---|
| Wet skid performance*1 | 100 | 104 | 114 | 115 |
| Notes to Table II<br>*1: See notes to Table I | | | | |

Standard Example 2: 300 g of Nipsil AQ (Toso Silica Industry) was taken into a stainless steel bowl. 30 g of 3-octanoylthiopropyltriethoxysilane was added, then a stainless steel spatula was used for stirring for 5 minutes to prepare treated silica, then the bulk density retention rate was measured. First, test samples of 20 g amounts were randomly selected from three groups of the treated silica were taken. The first sample was passed through a 0.50 mm sieve to be received by a 30.0 ml stainless steel cylinder. When the silica passed into the silica formed a pile, it was taken out by a straight spatula. The weight inside the cylinder was measured and found to be 7.369 g. The following formula was used to find the bulk density:

$$\text{Bulk } 0.24563\ (g/ml) \cong 7.369\ (g)\ /30\ (ml)$$

Since the bulk density of the silica used for the treatment was 0.240 g/ml, the bulk density retention rate was found by the following formula:

$$[(0.24563 - 0.240)/(0.240 \times 0.10)] \times 100 = 23.5\ (\%)$$

The same procedure was followed to measure the remaining sample, whereupon the values obtained were 170% and 50.8%. It was confirmed that the range of the bulk density retention rate was 23.5% to 170%. (Treatment method 1)

Comparative Example 5: 30 g of NUCA-1289 silane made by Nippon Unicar was slowly added by a Henschel mixer into 300 g of Nipsil AQ (Toso Silica Industry), while stirring, to prepare dry surface-treated silica particles. The silane coupling agent surface-treated silica particles were dried in an explosion-proof oven set to 150°C for 1 hour. The same method as in Standard Example 2 was used to measure the range of the bulk density retention rate. It was confirmed to be 75 to 82%.

(Treatment method 2)

Example 6: 30 g of 3-octanoylthiopropyl-triethoxysilane (NXT Silane) was slowly added by a Henschel mixer into 300 g of Nipsil AQ (Toso Silica Industry), while stirring, to prepare dry surface treated silica particles. The silane coupling agent-surface-treated silica particles were dried in an explosion-proof oven set to 150°C for 1 hour. The same method as in Standard Example 2 was used to measure the range of the bulk density retention rate. It was confirmed to be 95 to 98%. (Treatment method 2)

Example 7: Except for not drying in an explosion-proof oven, the same procedure was followed as in Example 6 for treatment. The same method as with Standard Example 2 was used to measure the range of the bulk density retention rate. It was confirmed to be 96 to 99%.

(Treatment method 3)

Standard Example 3, Examples 8 to 12, and Comparative Examples 6 to 9

Preparation of Samples

In each of the formulations of Table III, the ingredients other than the vulcanization accelerator and sulfur were mixed in a 3 liter internal mixer for 5 minutes and discharged, when reaching 165±5°C to obtain a master batch. This master batch was mixed with the vulcanization accelerator and sulfur by an open roll to obtain a rubber composition.

This rubber composition was used to evaluate its unvulcanized physical properties by the above-mentioned test method. The results are shown in Table III.

Next, the rubber composition thus obtained was vulcanized in a 15 x 15 x 0.2 cm mold at 160°C for 30 minutes to prepare a vulcanized rubber sheet, which was then measured for the physical properties of the vulcanized rubber by the above test methods except for the ΔE' (E' temperature dependency) and low temperature wet skid performance. The results are shown in Table III.

## Table III

| | Stand. Ex. 3 | Comp. Ex. 6 | Comp. Ex. 7 | Comp. Ex. 8 | Comp. Ex. 9 | Ex. 8 | Ex. 9 | Ex. 10 | Ex. 11 | Ex. 12 |
|---|---|---|---|---|---|---|---|---|---|---|
| Formulation (parts by weight) | | | | | | | | | | |
| SBR$^{*2}$ | 80 | 80 | 80 | 80 | 80 | 80 | 80 | 80 | 80 | 80 |
| NR$^{*3}$ | 20 | 20 | 20 | 20 | 20 | 20 | 20 | 20 | 20 | 20 |
| Silica $^{*1}$ | 70 | 70 | 70 | - | - | - | - | - | - | - |
| A-1289$^{*1}$ | 5.6 | - | - | - | - | - | - | - | - | - |
| A-1589$^{*1}$ | - | 5.6 | - | - | - | - | - | - | - | - |
| NXT$^{*1}$ | - | - | 7.7 | - | - | - | - | - | - | - |
| A-1289 treated silica (8%$^{*1}$) | - | - | - | 75.6 | - | - | - | - | - | - |
| A-1589 treated silica (8%$^{*1}$) | - | - | - | - | 75.6 | - | - | - | - | - |
| NXT treated silica (5%$^{*1}$) | - | - | - | - | - | - | 73.5 | - | - | - |
| NXT treated silica (11%$^{*1}$) | - | - | - | - | - | - | - | 77.7 | - | - |
| NXT treated silica (20%$^{*1}$) | - | - | - | - | - | - | - | - | 84 | - |
| NXT treated silica (2%$^{*1}$) | - | - | - | - | - | 71.4 | - | - | - | - |
| NXT treated silica (30%$^{*1}$) | - | - | - | - | - | - | - | - | - | 91 |
| CB$^{*1}$ | 10 | 10 | 10 | 10 | 10 | 10 | 10 | 10 | 10 | 10 |
| 6C$^{*1}$ | 2 | 2 | 2 | 2 | 2 | 2 | 2 | 2 | 2 | 2 |
| RD$^{*1}$ | 2 | 2 | 2 | 2 | 2 | 2 | 2 | 2 | 2 | 2 |
| Zinc White$^{*1}$ | 2 | 2 | 2 | 2 | 2 | 2 | 2 | 2 | 2 | 2 |
| Stearic acid $^{*1}$ | 1 | 1 | 1 | 1 | 1 | 1 | 1 | 1 | 1 | 1 |
| Oil$^{*1}$ | 10 | 10 | 10 | 10 | 10 | 10 | 10 | 10 | 10 | 10 |
| CZ$^{*1}$ | 2.2 | 2.2 | 2.2 | 2.2 | 2.2 | 2.2 | 2.2 | 2.2 | 2.2 | 2.2 |
| DPG$^{*1}$ | 0.2 | 0.2 | 0.2 | 0.2 | 0.2 | 0.2 | 0.2 | 0.2 | 0.2 | 0.2 |
| Sulfur$^{*1}$ | 1.6 | 1.6 | 1.6 | 1.6 | 1.6 | 1.6 | 1.6 | 1.6 | 1.6 | 1.6 |
| Evaluation of physical properties | | | | | | | | | | |
| Mooney viscosity (130°C) | 100 | 103 | 110 | 90 | 91 | 80 | 75 | 65 | 60 | 85 |
| Mooney viscosity (160°C) | 100 | 105 | 105 | 87 | 85 | 85 | 80 | 74 | 70 | 90 |
| Mooney viscosity (180°C) | 100 | 92 | 90 | 98 | 94 | 88 | 83 | 75 | 73 | 90 |
| Payne effect (160°C$^{*3}$) | 100 | 84 | 81 | 106 | 84 | 75 | 65 | 60 | 70 | 78 |
| Abrasion resistance (160°C$^{*3}$) | 100 | 90 | 100 | 101 | 94 | 105 | 115 | 130 | 120 | 112 |
| ΔE' | 100 | 92 | 75 | 90 | 95 | 73 | 70 | 67 | 65 | 73 |
| Low temperature wet skid performance | 100 | 95 | 98 | 105 | 97 | 105 | 110 | 115 | 112 | 107 |

(Note) For values of bulk density retention rate of treated silica, see Table I.

Notes to Table III

*1: See notes to Table I

*2: Nipol 1502 made by Nippon Zeon

*3: Natural rubber (TSR20)

ΔE': Difference in E' at -20°C and 20°C (dynamic elasticity) indexed against value of Standard Example 3 (Table III) or Standard Example 4 (Table IV). The smaller the value, the smaller the temperature dependency of E' shown.

Low temperature wet skid performance: A British Standard Portable Skid Tester (made by Stanley London) was used to measure the performance under conditions of a wet road surface (water temperature 8°C). The results were indexed to Standard Example 3. The larger the value, the better the low temperature wet skid performance shown.

Standard Example 4, Examples 13 to 14, and Comparative Example 10

Preparation of Samples

In each of the formulations shown in Table IV, the ingredients other than the vulcanization accelerator and sulfur were mixed by a 3 liter internal mixer and discharged, when reaching 165±5°C, to obtain a master batch. This master batch then had the vulcanization accelerator and sulfur kneaded into it by an open roll to obtain a rubber composition. This rubber composition was used and evaluated by the above test method for the unvulcanized physical properties. The results are shown in Table IV.

Next, each rubber composition thus obtained was vulcanized in a 15 x 15 x 0.2 cm mold at 160°C for 30 minutes to prepare a vulcanized rubber sheet, which was then measured by the above test methods for the physical properties of the vulcanized rubber. The results are shown in Table IV.

Table IV

| | Stand. Ex. 4 | Comp. Ex. 10 | Ex. 13 | Ex. 14 |
|---|---|---|---|---|
| Formulation (parts by weight) | | | | |
| SBR*2 | 80 | 80 | 80 | 80 |
| NR*3 | 20 | 20 | 20 | 20 |
| Silica*1 | 70 | 70 | 70 | 70 |
| CB*1 | 10 | 10 | 10 | 10 |
| 6C*1 | 2 | 2 | 2 | 2 |
| RD*1 | 2 | 2 | 2 | 2 |
| Zinc White*1 | 2 | 2 | 2 | 2 |
| Stearic acid *1 | 1 | 1 | 1 | 1 |
| Oil*1 | 10 | 10 | 10 | 10 |
| CZ*1 | 2.2 | 2.2 | 2.2 | 2.2 |
| DPG*1 | 0.2 | 0.2 | 0.2 | 0.2 |
| Sulfur*1 | 1.6 | 1.6 | 1.6 | 1.6 |

(continued)

| | Stand. Ex. 4 | Comp. Ex. 10 | Ex. 13 | Ex. 14 |
|---|---|---|---|---|
| A-1289*1<br>NXT*1 | -<br>Treatment method 1 | Treatment method 2<br>- | -<br>Treatment method 2 | -<br>Treatment method 3 |
| Bulk density retention rate (%) | 38 to 160 | 78 to 84 | 96 to 98 | 97 to 99 |
| Evaluation of physical properties | | | | |
| Mooney viscosity (130°C) | 100 | 90 | 65 | 64 |
| Mooney viscosity (160°C) | 100 | 87 | 74 | 72 |
| Mooney viscosity (180°C) | 100 | 98 | 75 | 74 |
| Payne effect | 100 | 106 | 60 | 59 |
| Abrasion resistance | 100 | 101 | 130 | 130 |
| ΔE' | 100 | 90 | 67 | 66 |
| Low temperature wet skid performance | 100 | 104 | 115 | 116 |

Notes to Table IV
*1: See notes to Table I
*2: Nipol 1502 made by Nippon Zeon
*3: Natural rubber (TSR20)
*4: See notes to Table II

Standard Example 4: 300 g of Nipsil AQ (Toso Silica Industry) was taken into a stainless steel bowl. 30 g of 3-octanoylthiopropyltriethoxysilane (NXT Silane) was added, then a stainless steel spatula was used for stirring for 5 minutes. Part of the result was analyzed by the Soxhlet extraction method and elemental analysis method. The same method as in Standard Example 2 was used to measure the range of the bulk density retention rate. It was confirmed to be 38 to 160%. (Treatment method 1)

Comparative Example 10: 30 g of NUCA-1289 silane made by Nippon Unicar was slowly added by a Henschel mixer into 300 g of Nipsil AQ (Toso Silica Industry), while stirring, to prepare dry surface-treated silica particles. The silane coupling agent surface-treated silica particles were dried in an explosion-proof oven set to 150°C for 1 hour. The same method as in Standard Example 2 was used to measure the range of the bulk density retention rate. It was confirmed to be 78 to 84%.

(Treatment method 2)

Example 13: 30 g of 3-octanoylthiopropyl-triethoxysilane (NXT Silane) was slowly added by a Henschel mixer into 300 g of Nipsil AQ (Toso Silica Industry), while stirring, to prepare dry surface treated silica particles. The silane coupling agent surface-treated silica particles were dried in an explosion-proof oven set to 150°C for 1 hour. The same method as in Standard Example 2 was used to measure the range of the bulk density retention rate. It was confirmed to be 96 to 98%. (Treatment method 2)

Example 14: Except for not drying in an explosion-proof oven, the same procedure was followed as in Example 13 for treatment. The same method as with Standard Example 2 was used to measure the range of the bulk density retention rate. It was confirmed to be 97 to 99%.

(Treatment method 3)

As explained above, in the prior art, in the silica-containing rubber composition, the silane coupling agent used is typically bis-3-triethoxysilylpropyltetrasulfide (A-1289), but this compound has two triethoxysilyl groups which serve

as reaction sites with silica, so if the treatment concentration is increased, the silane coupling agents will react with each other, the silica will aggregate, and the viscosity will rise. Further, it is possible to use γ-mercaptopropyltrimethoxysilane having one trimethoxysilyl group and having one sulfur atom as the material, but a mercapto group is active, so scorching occurs during the mixture and the increase in the viscosity is caused. As opposed to this, according to the present invention, by blending in silica treated by 3-octanoylthiopropyltrialkoxy-silane, preferably by a silane coupling agent treatment rate of 4 to 25%, it is possible to keep the Mooney viscosity of the rubber composition low. Further, in a conventional silane coupling agent (A-1289)-treated silica formulation, to keep the Mooney viscosity low, mixing at 140 to 165°C is necessary. Therefore, rubber scorching occurs due to the sulfur contained in the silane coupling agent, or the polymer radicals formed by molecular cleavage react and gelation occurs. As opposed to this, the rubber composition containing silica pretreated by 3-octanoylthiopropyltri-alkoxysilane according to the present invention has an extremely small dependency of the Mooney viscosity on the mixing temperature, a smaller variation in Mooney viscosity due to mixing, and the capability to be mixed at a temperature of about 120 to 130°C, and, therefore, no rubber scorching due to the sulfur contained in the silane coupling agent occurs and the polymer radicals formed by molecular cleavage do not react and, therefore, excessive gelation can be suppressed. Further, when using an ordinary mono- or disulfide-type silane coupling agent, the reinforcing capability of the rubber is decreased, compared with the case of using tetrasulfide type A-1289, and, therefore, with the system including silica pretreated by 3-octanoylthiopropyltrialkoxysilane of the present invention, there is a reinforcing capability equal to the A-1289 or more.

Standard Example 5, Examples 15 to 19, and Comparative Examples 11 to 14

Preparation of Samples

In each of the formulations shown in Table V, the ingredients other than the vulcanization accelerator and sulfur were mixed by a 3 liter internal mixer and discharged, when reaching 145±5°C, to obtain a master batch. This master batch then had the vulcanization accelerator and sulfur mixed thereinto by an open roll to obtain a rubber composition. This rubber composition was used and evaluated by the above test method for the unvulcanized physical properties. The results are shown in Table V.

Next, each rubber composition thus obtained was vulcanized in a 15 x 15 x 0.2 cm mold at 160°C for 30 minutes to prepare a vulcanized rubber sheet which was then measured by the above test methods for the physical properties of the vulcanized rubber. The results are shown in Table V.

Test Methods for Evaluation of Rubber Physical Properties

Mooney viscosity ($ML_{1+4}$): Measured based on JIS K-6300 mixed at 120°C and 135°C.

Abrasion resistance: A Lambourn abrasion tester was used to measure the volume of abrasion loss under conditions of a temperature of 23°C/slip rate 50%. The obtained results are shown indexed against the value of Standard Example 5. The larger this numeral value, the better the abrasion resistance shown.

ΔE' (change of -50°C to 0°C): E' at -50°C and 0° (stored elasticity) measured based on JIS K-6394 under conditions of frequency 20 Hz/initial strain 10%/strain amplitude 2%. The smaller the difference of E' at -50°C and 0°C, the smaller the E' temperature dependency.

Change of hardness due to aging: Hardness before and after aging (80°C x 96 hours) (measured based on JIS K-6200 at 80°C) with the value of the ratio (after aging/before aging) indexed to the value of Standard Example 5. The smaller this value, the smaller the change in hardness due to aging.

Frictional force on ice: Frictional coefficient on ice measured by an inside drum type ice friction tester. The measurement temperature was made -1.5°C and -5°C. The results are indexed to the value of Standard Example 5. The larger the value, the higher the frictional force on ice shown.

Table V

| | Stand. Ex. 5 | Comp. Example | | | | Example | | | | |
|---|---|---|---|---|---|---|---|---|---|---|
| | | 11 | 12 | 13 | 14 | 15 | 16 | 17 | 18 | 19 |
| Formulation (parts by weight) | | | | | | | | | | |
| NR | 60 | 60 | 60 | 60 | 60 | 60 | 60 | 60 | 60 | 60 |
| BR | 40 | 40 | 40 | 40 | 40 | 40 | 40 | 40 | 40 | 40 |
| Silica | 20 | 20 | 20 | - | - | - | - | - | - | - |
| A-1289 | 1.6 | - | - | - | - | - | - | - | - | - |
| A-1589 | - | 1.6 | - | - | - | - | - | - | - | - |
| NXT | - | - | 2.2 | - | - | - | - | - | - | - |
| A-1289 treated silica (8%*1) (75 to 82%*3) | - | - | - | 21.6 | - | - | - | - | - | - |
| A-1589 treated silica (8%*1) (85 to 90%*3) | - | - | - | - | 21.6 | - | - | - | - | - |
| NXT treated silica (5%*2) (95 to 99%*3) | - | - | - | - | - | - | 21.0 | - | - | - |
| NXT treated silica (11%*2) (96 to 98%*3) | - | - | - | - | - | - | - | 22.2 | - | - |
| NXT treated silica (20%*2) (75 to 82%*3) | - | - | - | - | - | - | - | - | 24 | - |
| NXT treated silica (2%*2) (95 to 98%*3) | - | - | - | - | - | 20.4 | - | - | - | - |
| NXT treated silica (30%*2) (90 to 105%*3) | - | - | - | - | - | - | - | - | - | 26 |
| CB | 40 | 40 | 40 | 40 | 40 | 40 | 40 | 40 | 40 | 40 |
| 6C | 2 | 2 | 2 | 2 | 2 | 2 | 2 | 2 | 2 | 2 |
| Zinc White | 3 | 3 | 3 | 3 | 3 | 3 | 3 | 3 | 3 | 3 |
| Stearic acid | 1 | 1 | 1 | 1 | 1 | 1 | 1 | 1 | 1 | 1 |
| Oil | 30 | 30 | 30 | 30 | 30 | 30 | 30 | 30 | 30 | 30 |
| CZ | 1.5 | 1.5 | 1.5 | 1.5 | 1.5 | 1.5 | 1.5 | 1.5 | 1.5 | 1.5 |
| Sulfur | 2.0 | 2.0 | 2.0 | 2.0 | 2.0 | 2.0 | 2.0 | 2.0 | 2.0 | 2.0 |
| Evaluation of physical properties | | | | | | | | | | |
| Mooney viscosity (120°C) | 100 | 103 | 110 | 90 | 91 | 80 | 75 | 65 | 60 | 85 |
| Mooney viscosity (135°C) | 100 | 105 | 105 | 87 | 85 | 85 | 80 | 74 | 70 | 90 |
| Abrasion resistance | 100 | 87 | 97 | 98 | 91 | 102 | 112 | 127 | 117 | 110 |
| ΔE' (change of -50°C to 0°C) | 100 | 92 | 87 | 94 | 95 | 87 | 86 | 83 | 80 | 81 |
| Change of hardness due to aging (80°C x 96 hr) | 100 | 96 | 97 | 100 | 100 | 97 | 96 | 90 | 89 | 97 |
| Frictional force on ice (-1.5°C) | 100 | 93 | 98 | 103 | 95 | 105 | 110 | 115 | 112 | 103 |
| Frictional force on ice (-5°C) | 100 | 95 | 101 | 105 | 97 | 115 | 122 | 135 | 129 | 108 |

*1: Silane coupling agent treatment rate by A-1289 or A-1589

*2: Silane coupling agent treatment rate by NXT

*3: Bulk density retention rate

Notes to Table V

NR: Natural rubber (TSR20)

BR: Nipol BR 1220 made by Nippon Zeon

Silica: Nipsil AQ made by Toso Silica Industry

A-1289: Bis(3-triethoxysilylpropyl)tetrasulfane made by Nippon Unicar

A-1589: Bis(3-triethoxysilylpropyl)disulfane made by Nippon Unicar

NXT: 3-octanoylthiopropyltriethoxysilane (NXT Silane) made by Nippon Unicar

A-1289 surface-treated silica and A-1589 surface treated silica: Nippon Unicar NUCA-1289 silane or NUCA-1589 was slowly added in Henschel mixer into Nipsil AQ (Toso Silica Industry) while stirring to prepare dry reaction silica particles. The silane coupling agent reaction silica particles were dried in an explosion-proof oven set to 150°C for 1 hour.

NXT treated silica: The above NXT was slowly added by a Henschel mixer into Nipsil AQ (Toso Silica Industry) while stirring to prepare dry reaction silica particles. The silane coupling agent reaction silica particles were dried in an explosion-proof oven set to 150°C for 1 hour. Note that the bulk density retention rate was found in the above way. The results are shown in Table V.

CB: Shoblack N339 made by Showa Cabot

6C: Santoflex 6PPD made by Flexsys

Zinc White: Ginrei R made by Toa Zinc

Stearic acid: Beads Stearic Acid YR made by NOF Corporation

Oil: Process X-140 made by Japan Energy

CZ: Noccelar CZ-G made by Ouchi Shinko Chemical Industrial

Sulfur: Oil extended sulfur made by Karuizawa Refinery (oil content 5%)

As is clear from the results shown in Table V, in Examples 15 to 19, compared with Standard Example 5, the decrease in the Mooney viscosity is large and the abrasion resistance, ΔE', the change in hardness due to aging, and frictional force on ice are improved. As opposed to this, in Comparative Examples 11 and 12, A-1589 and 3-octanoylthiopropyltriethoxysilane (NXT silane) were charged into solutions, so compared with the A-1289 formulation, the Mooney viscosity is high. In Comparative Examples 13 and 14, silica reacted with A-1289 and A-1589 is included, so compared with the charging of A-1289 and A-1589 alone, the decrease in the viscosity is large and, compared with Comparative Examples 11 and 12, the abrasion resistance and frictional force on ice are improved, but even so the levels of Examples 15 to 19 are not achieved.

INDUSTRIAL APPLICABILITY

As explained above, the silica-containing rubber composition according to the present invention can improve the abrasion resistance, wet skid performance, etc., without detracting from the reinforcing action and, for example, is suitable for use for a passenger car tread rubber, in particular a passenger car tread rubber designed for markets of low usage temperature regions etc. Further, the rubber composition according to the second aspect of the present invention is superior in processability, small in temperature dependency of E' (stored elasticity) at the time of a low temperature (-50°C to 0°C), superior in frictional force on ice and abrasion resistance, and small in change of hardness due to aging, and, therefore, is useful, as a rubber composition for a studless tire.

## Claims

1. A surface-treated silica treated, on the surface thereof, with at least one silane coupling agent X represented by the formula (I):

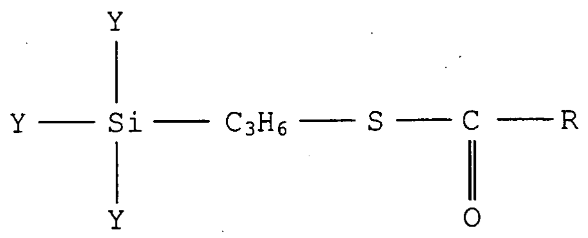

(I)

wherein Y independently indicates a methoxy, ethoxy, propoxy, isopropoxy, butoxy, isobutoxy or acetoxy group, R indicates a $C_1$ to $C_{18}$ hydrocarbon group selected from a linear, cyclic or branched alkyl group, alkenyl group, aryl group and aralkyl group.

2. A surface-treated silica as claimed in claim 1, wherein the silica treated, on its surface, with the silane coupling agent X has a bulk density retention rate of 50 to 150%.

3. A surface-treated silica as claimed in claim 1 or 2, wherein the amount of surface treatment of the silica with the silane coupling agent X satisfies the relationship:

$$1 \le (\text{the weight of silane coupling agent X/the weight of silica before treatment}) \times 100 \le 25$$

4. A rubber composition comprising a rubber component containing 100 parts by weight of at least one diene-based rubber and 2 to 100 parts by weight of a surface-treated silica treated, on its surface in advance, with a silane coupling agent X according to any one of claims 1 to 3.

5. A rubber composition as claimed in claim 4, wherein the surface-treated silica is included in an amount of 20 to 100 parts by weight.

6. A rubber composition as claimed in claim 5, wherein the rubber component contains natural rubber in an amount of 10% by weight or more and styrene-butadiene copolymer rubber in an amount of 20% by weight or more.

**7.** A rubber composition for a studless tire comprising 100 parts by weight of a diene-based rubber containing 30 to 80 parts by weight of natural rubber and 70 to 20 parts by weight of a polybutadiene rubber and 2 to 30 parts by weight of the surface-treated silica according to any one of claims 1 to 3.

**8.** A rubber composition for a studless tire as claimed in claim 7, wherein the diene-based rubber has an average glass transition temperature of -55°C or less.

**INTERNATIONAL SEARCH REPORT**

International application No.
PCT/JP2004/017530

A. CLASSIFICATION OF SUBJECT MATTER
Int.Cl[7] C01B33/18, C08L9/00, C08K9/06, C09C1/30, C09C3/12

According to International Patent Classification (IPC) or to both national classification and IPC

B. FIELDS SEARCHED

Minimum documentation searched (classification system followed by classification symbols)
Int.Cl[7] C01B33/00-33/193

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2005 |
| Kokai Jitsuyo Shinan Koho | 1971-2005 | Jitsuyo Shinan Toroku Koho | 1996-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2001-505225 A (CK Witco Corp.), 17 April, 2001 (17.04.01), Claim 18; page 30, line 25 to page 31, line 1; page 35, lines 13 to 16; page 36, lines 13 to 17; page 36, lines 23 to 27; page 41, lines 2 to 5; examples 5, 6, 9 & EP 958298 A1 & US 6127468 A | 1-8 |
| A | JP 2003-64221 A (Degssa AG.), 05 March, 2003 (05.03.03), Claims 1, 22, 27, 30, 32 & EP 1256604 A2 & US 2003/83516 A1 | 1-8 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>17 February, 2005 (17.02.05) | Date of mailing of the international search report<br>08 March, 2005 (08.03.05) |
| Name and mailing address of the ISA/<br>Japanese Patent Office | Authorized officer |
| Facsimile No. | Telephone No. |

Form PCT/ISA/210 (second sheet) (January 2004)